# EUROPEAN PATENT SPECIFICATION

(11) **EP 3 640 003 B1**
(45) Date of publication and mention of the grant of the patent: **28.04.2021**
(21) Application number: 19201680.6
(22) Date of filing: 07.10.2019
(51) Int. Cl.: B29C 45/83, F16C 33/10, F16C 33/74, B29C 45/66, F16J 15/3208

(54) **INJECTION MOLDING MACHINE**
SPRITZGIESSMASCHINE
MACHINE DE MOULAGE À INJECTION

(30) Priority: 17.10.2018 JP 2018195973
(43) Date of publication of application: 22.04.2020
(73) Proprietor: SUMITOMO HEAVY INDUSTRIES, LTD., Tokyo 141-6025 (JP)
(72) Inventor: MOROZUMI, Tomohito, Chiba-shi, Chiba, 263-0001, (JP); TANAKA, Yoshitada, Chiba-shi, Chiba, 263-0001, (JP); ITO, Yosuke, Chiba-shi, Chiba, 263-0001, (JP)
(74) Representative: Louis Pöhlau Lohrentz

(56) References cited:
- EP-A1- 3 270 013
- DE-A1-102009 006 808
- JP-A- H04 239 583
- US-A- 1 969 008
- US-A1- 2004 046 330

## Description

### BACKGROUND OF THE INVENTION

### Field of the Invention

The present invention relates to an injection molding machine.

### Description of Related Art

An injection molding machine is known, in which a movable platen is moved by a link mechanism.

Japanese Unexamined Patent Publication No. 2000-141436 discloses a lubrication device of a toggle link mechanism having a seal structure including seal grooves provided on both end portions of a bush inner diameter surface and seal materials fitted to the seal grooves . German Unexamined Patent Publication No. 102009006808 discloses a joint mechanism for an injection molding machine with at least two joint elements which have sealing elements arranged therebetween. United States Patent No. 1969008 discloses machinery packing adapted for use in the sealing of joints against fluid pressure or preventing the escape of lubricant. European Unexamined Patent Publication No. 3270013 discloses a sealing device equipped with a combination seal obtained by combining a first ring made of resin and a second ring made of a rubber-like elastic material. United States Unexamined Patent Publication No. 2004/046330 discloses a seal arranged between a radially inwardly facing outer boundary surface of an annular sealing gap and a radially outwardly facing inner boundary surface of the sealing gap. Japanese Unexamined Patent Publication No. H04-239583 discloses a tie-bar grease seal of an injection molding machine.

### SUMMARY OF THE INVENTION

Meanwhile, if an injection molding machine is operated for a long time, a seal member is worn. If the seal member is worn, maintenance is performed to replace the seal member.

Accordingly, an object of the present invention is to provide an injection molding machine capable of improving maintainability.

According to an embodiment of the present invention, there is provided an injection molding machine including: a toggle mechanism which connects a movable platen and a rear platen, in which the toggle mechanisms includes a plurality of links, a first connection portion which connects the movable platen and the link, a second connection portion which connects the links to each other, and a third connection portion which connects the rear platen and the link, and at least one of the first to third connection portions includes a bush, a connection pin which is inserted into the bush, a supply channel through which a lubricant is supplied to a bearing gap which is a gap between the bush and the connection pin, a discharge channel through which the lubricant is discharged from the bearing gap, a seal member which seals the bearing gap, and a tightening mechanism for tightening the seal member, and a sealing performance between the seal member and the connection pin is adjustable by the tightening mechanism.

According to the present invention, it is possible to provide the injection molding machine capable of improving the maintainability.

### BRIEF DESCRIPTION OF THE DRAWINGS

Fig. 1 is a view showing a state when a mold opening of an injection molding machine according to an embodiment is completed.
Fig. 2 is a view showing a state when a mold of the injection molding machine according to the embodiment is clamped.
Fig. 3 is a cross-sectional schematic view explaining a lubrication structure of a connection pin and a bush in a connection portion of the embodiment.
Fig. 4 is a cross-sectional schematic view explaining a lubrication structure of a connection pin and a bush in a connection portion of another embodiment.
Fig. 5 is a view showing an example of a pressing member.
Fig. 6 is a view showing an example of a seal member.

### DETAILED DESCRIPTION OF THE INVENTION

Hereinafter, an embodiment of the present invention is described with reference to the drawings. In each drawing, the same or corresponding reference numerals are assigned to the same or corresponding configurations, and descriptions thereof are omitted.

### (Injection Molding Machine)

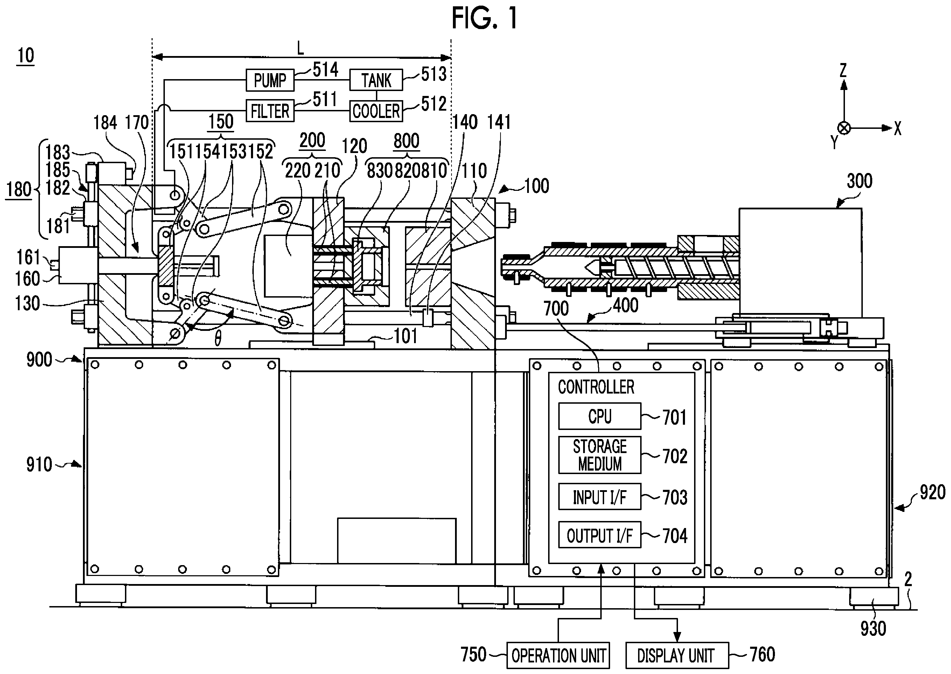

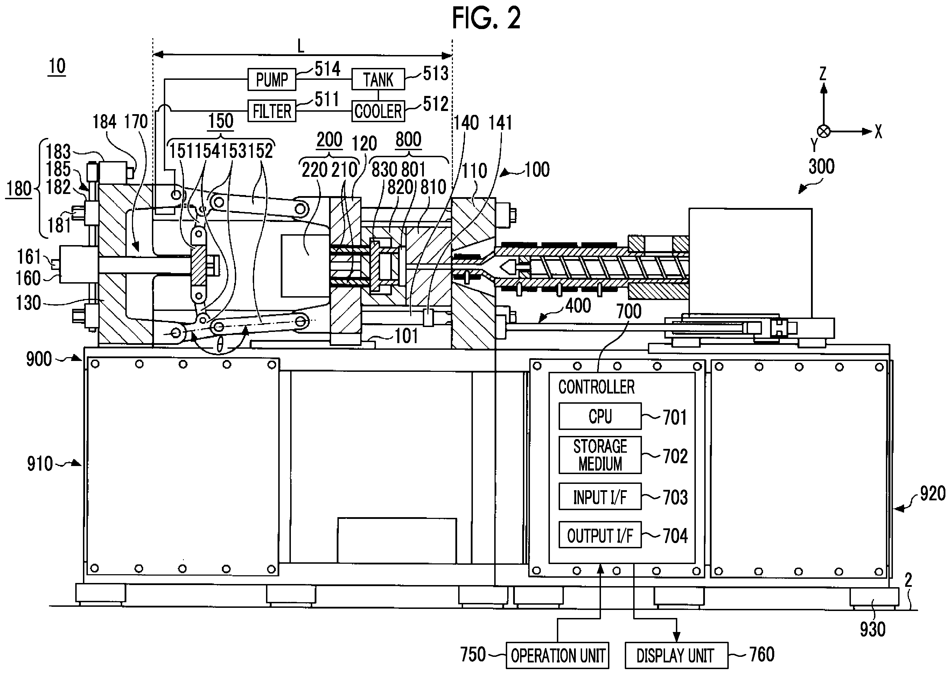

Fig. 1 is a view showing a state when mold opening of an injection molding machine according to an embodiment is completed. Fig. 2 is a view showing a state when a mold of the injection molding machine according to the embodiment is clamped. In Figs . 1 and 2, an X axis direction, a Y axis direction, and a Z axis direction are directions perpendicular to each other. The X axis direction and the Y axis direction indicate a horizontal direction, and the Z axis direction indicates a vertical direction. In a case where the mold clamping unit 100 is a horizontal type mold clamping unit, the X axis direction is mold opening and closing directions, and the Y axis direction is a width direction of an injection molding machine 10. A negative side in the Y axis direction is referred to as an operation side, and a positive side in the Y axis direction is referred to as a counter operation side.

As shown in Figs. 1 and 2, the injection molding machines 10 include the mold clamping unit 100, an ejector unit 200, an injection unit 300, a movement unit 400, a controller 700, and a frame 900. The frame 900 includes a mold clamping unit frame 910 and an injection unit frame 920. Each of the mold clamping unit frame 910 and the injection unit frame 920 is installed on a floor 2 via a leveling adjuster 930. The controller 700 is disposed in an internal space of the injection unit frame 920. Hereinafter, each component of the injection molding machine 10 will be described.

### (Mold Clamping Unit)

In descriptions of the mold clamping unit 100, a movement direction (X axis positive direction) of a movable platen 120 when a mold is closed is defined as a front side, and a movement direction (X axis negative direction) of the movable platen 120 when the mold is open is defined as a rear side.

The mold clamping unit 100 performs mold closing, pressure rising, mold clamping, decompression, and mold opening of a mold unit 800. The mold unit 800 includes a stationary mold 810 and a movable mold 820.

For example, the mold clamping unit 100 is a horizontal type clamping unit and the mold opening and closing directions are the horizontal direction. The mold clamping unit 100 includes a stationary platen 110, the movable platen 120, a toggle support 130, a tie bar 140, a toggle mechanism 150, a mold clamping motor 160, a motion conversion mechanism 170, and a mold space adjustment mechanism 180.

The stationary platen 110 is fixed to the mold clamping unit frame 910. The stationary mold 810 is attached to a surface of the stationary platen 110 facing the movable platen 120.

The movable platen 120 is disposed to be movable in the mold opening and closing directions with respect to the mold clamping unit frame 910. A guide 101 which guides the movable platen 120 is placed on the mold clamping unit frame 910. The movable mold 820 is attached to a surface of the movable platen 120 facing the stationary platen 110. The movable platen 120 moves forward or rearward with respect to the stationary platen 110, and thus, the mold closing, the pressure rising, the mold clamping, the decompression, and the mold opening of the mold clamping unit 800 are performed.

The toggle support 130 is connected so as to be separated from the stationary platen 110, and is placed on the mold clamping unit frame 910 to be movable in mold opening and closing directions. In addition, the toggle support 130 may be disposed to be movable along a guide which is placed on the mold clamping unit frame 910. The guide of the toggle support 130 may be also used as the guide 101 of the movable platen 120.

In addition, in the present embodiment, the stationary platen 110 is disposed to be fixed to the mold clamping unit frame 910, and the toggle support 130 is disposed to be movable in the mold opening and closing directions with respect to the mold clamping unit frame 910. However, the toggle support 130 may be disposed to be fixed to the mold clamping unit frame 910, and the stationary platen 110 may be disposed to be movable in the mold opening and closing directions with respect to the mold clamping unit frame 910.

The tie bar 140 connects the stationary platen 110 and the toggle support 130 with a gap L in the mold opening and closing directions. A plurality of (for example, four) tie bars 140 may be used. The plurality of tie bars 140 are disposed to be parallel in the mold opening and closing directions and extend according to a mold clamping force. A tie bar strain detector 141 which detects strain of the tie bar 140 may be provided in at least one tie bar 140. The tie bar strain detector 141 sends a signal indicating a detection result to the controller 700. The detection result of the tie bar strain detector 141 is used for detection or the like of the mold clamping force.

In addition, in the present embodiment, the tie bar strain detector 141 is used as a mold clamping force detector which detects the mold clamping force. However, the present invention is not limited to this. The mold clamping force detector is not limited to a strain gauge type detector, and may be a piezoelectric type detector, a capacitance type detector, a hydraulic type detector, an electromagnetic type detector, or the like, and an attachment position of the mold clamping force detector is also not limited to the tie bar 140.

The toggle mechanism 150 is disposed between the movable platen 120 and the toggle support 130 and moves the movable platen 120 in the mold opening and closing directions with respect to the toggle support 130. The toggle mechanism 150 includes a crosshead 151, a pair of link groups, or the like. Each link group includes a first link 152 and a second link 153 which are bendably/stretchably connected by pins or the like. The first link 152 is attached to the movable platen 120 so as to be oscillated by pins or like. The second link 153 is attached to the toggle support 130 so as to be oscillated by pins or the like. The second link 153 is attached to the crosshead 151 via a third link 154. If the crosshead 151 moves forward or rearward with respect to the toggle support 130, the first link 152 and the second link 153 are bent and stretched and the movable platen 120 moves forward or rearward with respect to the toggle support 130.

In addition, a configuration of the toggle mechanism 150 is not limited to the configuration shown in Figs. 1 and 2. For example, in Figs. 1 and 2, the number of nodes of each link group is five. However, the number of nodes may be four, and one end portion of the third link 154 may be connected to a node between the first link 152 and the second link 153.

The mold clamping motor 160 is attached to the toggle support 130 and operates the toggle mechanism 150. The mold clamping motor 160 moves the crosshead 151 forward or rearward with respect to the toggle support 130, and thus, the first links 152 and the second links 153 are bent and stretched, and the movable platen 120 moves forward or rearward with respect to the toggle support 130. The mold clamping motor 160 is directly connected to the motion conversion mechanism 170. However, the mold clamping motor 160 may be connected to the motion conversion mechanism 170 via a belt, a pulley, or the like.

The motion conversion mechanism 170 converts a rotarymotion of the mold clamping motor 160 into a linear motion of the crosshead 151. The motion conversion mechanism 170 includes a screw shaft and a screw nut which is screwed to the screw shaft. A ball or a roller may be interposed between the screw shaft and the screw nut.

The mold clamping unit 100 performs a mold closing process, a pressure rising process, a mold clamping process, a decompression process, a mold opening process, or the like under the control of the controller 700.

In the mold closing process, the mold clamping motor 160 is driven and the crosshead 151 moves forward to a mold closing completion position at a set movement speed. Accordingly, the movable platen 120 moves forward and the movable mold 820 comes into contact with the stationary mold 810. For example, a position or speed of the crosshead 151 is detected using a mold clamping motor encoder 161 or the like. The mold clamping motor encoder 161 detects the rotation of the mold clamping motor 160 and sends a signal indicating the detection result to the

### controller 700.

In addition, a crosshead position detector which detects the position of the crosshead 151 and a crosshead movement speed detector which detects the movement speed of the crosshead 151 are not limited to the mold clamping motor encoder 161, and a general detector can be used. In addition, a movable platen position detector which detects the position of the movable platen 120 and a movable platen movement speed detector which detects the movement speed of the movable platen 120 are not limited to the mold clamping motor encoder 161, and a general detector can be used.

In the pressure rising process, the mold clamping motor 160 is further driven, the crosshead 151 further moves forward from the mold closing completion position to a mold clamping position, and thus, the mold clamping force is generated.

In the mold clamping process, the mold clamping motor 160 is driven, and the position of the crosshead 151 is maintained at the mold clamping position. In the mold clamping process, the mold clamping force generated in the pressure rising process is maintained. In the mold clamping process, a cavity space 801 (refer to Fig. 2) is formed between the movable mold 820 and the stationary mold 810, and the cavity space 801 is filled with a liquid molding material by the injection unit 300. A filled molding material is solidified, and thus, a molding product can be obtained.

One cavity space 801 may be provided or a plurality of cavity spaces 801 may be provided. In the latter case, a plurality of molding products can be simultaneously obtained. An insert material may be disposed in a portion of the cavity space 801, and the other portion of the cavity space 801 may be filled with the molding material. The insert material and the molding material are integrated with each other, and thus, the molding product can be obtained.

In the decompression process, the mold clamping motor 160 is driven, and the crosshead 151 moves rearward from the mold clamping position to a mold opening start position. Accordingly, the movable platen 120 moves rearward, and the mold clamping force is reduced. The mold opening start position and the mold closing completion position may be the same position as each other.

In the mold opening process, the mold clamping motor 160 is driven and the crosshead 151 moves rearward from the mold opening start position to a mold opening completion position at a set movement speed. Accordingly, the movable platen 120 moves rearward, and the movable mold 820 is separated from the stationary mold 810. Thereafter, the ejector unit 200 ejects the molding product from the movable mold 820.

Setting conditions in the mold closing process, the pressure rising process, and the mold clamping process are collectively set as a series of setting conditions. For example, a movement speed or position (including mold opening start position, movement speed switching position, mold closing completion position, and mold clamping position) of the crosshead 151 and the mold clamping force in the mold closing process and the pressure rising process are collectively set as a series of setting conditions. The mold closing start position, the movement speed switching position, the mold closing completion position, and the mold clamping position are arranged in this order from the rear side to the front side and indicate start points and end points of sections where the movement speed is set. The movement speed is set for each section. The movement speed switching position may be one or more. The movement speed switching position may not be set. Only one of the mold clamping position and the mold clamping force may be set.

Setting conditions are similarly set in the decompression process and the mold opening process . For example, the movement speed or positions (mold opening start position, movement speed switching position, and mold opening completion position) of the crosshead 151 in the decompression process and the mold opening process are collectively set as a series of setting conditions. The mold opening start position, the movement speed switching position, and the mold opening completion position are arranged in this order from the from side to the rear side and indicate start points and end points of sections where the movement speed is set. The movement speed is set for each section. The movement speed switching position may be one or more. The movement speed switching position may not be set. The mold opening start position and the mold closing completion position are the same as each other. Moreover, the mold opening completion position and the mold closing start position may be the same as each other.

In addition, instead of the movement speed, the positions, or the like of the crosshead 151, a movement speed, positions, or the like of the movable platen 120 maybe set. Moreover, instead of the position (for example, the mold clamping position) of the crosshead or the position of the movable platen, the mold clamping force may be set.

Meanwhile, the toggle mechanism 150 amplifies a driving force of the mold clamping motor 160 and transmits the amplified driving force to the movable platen 120. An amplification magnification of the toggle mechanism 150 is also referred to as a toggle magnification. The toggle magnification is changed according to an angle θ (hereinafter, also referred to a "link angle θ") between the first link 152 and the second link 153. The link angle θ is obtained from the position of the crosshead 151. When the link angle θ is 180°, the toggle magnification becomes the maximum value.

In a case where a space of the mold unit 800 is changed by replacement of the mold unit 800, a temperature change of the mold unit 800, or the like, a mold space adjustment is performed such that a predetermined mold clamping force is obtained when the mold is clamped. For example, in the mold space adjustment, the gap L between the stationary platen 110 and the toggle support 130 is adjusted such that the link angle θ of the toggle mechanism 150 at the time of a mold touch where the movable mold 820 comes into contact with the stationary mold 810 becomes a predetermined angle.

The mold clamping unit 100 includes the mold space adjustment mechanism 180. The mold space adjustment mechanisms 180 performs the mold space adjustment by adjusting the gap L between the stationary platen 110 and the toggle support 130. In addition, for example, a timing of the mold space adjustment is performed from an end of the molding cycle to a start of the next molding cycle. For example, the mold space adjustment mechanism 180 includes a screw shaft 181 which is formed on a rear end portion of the tie bar 140, a screw nut 182 which is supported by the toggle support 130 to be rotatable and immovable forward or rearward, and a mold space adjustment motor 183 which rotates the screw nut 182 screwed to the screw shaft 181.

The screw shaft 181 and the screw nut 182 are provided for each tie bar 140. A rotational driving force of the mold space adjustment motor 183 may be transmitted to a plurality of screw nuts 182 via a rotational driving force transmission portion 185. The plurality of screw nuts 182 can be synchronously rotated with each other. In addition, it is possible to rotate the plurality of screw nuts 182 individually by changing a transmission path of the rotational driving force transmission portion 185.

For example, the rotational driving force transmission portion 185 includes a gear or the like. In this case, a driven gear is formed on an outer periphery of each screw nut 182, a drive gear is attached to an output shaft of the mold space adjustment motor 183, and an intermediate gear which engages with a plurality of driven gears and drive gears is rotatably held by a center portion of the toggle support 130. In addition, the rotational driving force transmission portion 185 may include a belt, a pulley, or the like instead of the gear.

An operation of the mold space adjustment mechanism 180 is controlled by the controller 700. The controller 700 drives the mold space adjustment motor 183 to rotate the screw nut 182. As a result, a position of the toggle support 130 with respect to the tie bar 140 is adjusted, and thus, the gap L between the stationary platen 110 and the toggle support 130 is adjusted. Moreover, a combination of a plurality of the mold space adjustment mechanisms may be used.

The gap L is detected using a mold space adjustment motor encoder 184. The mold space adjustment motor encoder 184 detects a rotation amount or a rotation direction of the mold space adjustment motor 183 and sends a signal indicating a detection result to the controller 700. The detection result of the mold space adjustment motor encoder 184 is used to monitor or control the position of the toggle support 130 or the gap L. In addition, a toggle support position detector which detects the position of the toggle support 130 and a gap detector which detects the gap L are not limited to the mold space adjustment motor encoder 184, and a general encoder can be used.

In addition, the mold clamping unit 100 of the present embodiment is a horizontal type mold clamping unit in which the mold opening and closing directions are horizontal directions. However, the mold clamping unit 100 may be a vertical type mold clamping unit in which the mold opening and closing directions are vertical directions.

In addition, the mold clamping unit 100 of the present embodiment has the mold clamping motor 160 as a drive source. However, the mold clamping unit 100 may have a hydraulic cylinder instead of the mold clamping motor 160. In addition, the mold clamping unit 100 may have a linear motor for opening and closing a mold and may have an electromagnet for clamping a mold.

### (Ejector Unit)

The ejector unit 200 is attached to the movable platen 120 and moves forward or rearward together with the movable platen 120. The ejector unit 200 performs an ejection process under the control of the controller 700. In the ejection process, an ejector rod 210 is moved forward from a standby position to an ejection position at a set movement speed by a driving mechanism 220, and thus, a movable member 830 is moved forward and the molding product is ejected. Thereafter, the ejector rod 210 is moved rearward at a set movement speed by the driving mechanism 220, and thus, the movable member 830 is moved rearward to an original standby position.

### (Injection Unit)

The injection unit 300 is disposed to be movable forward or rearward with respect to the mold unit 800. The injection unit 300 comes into contact with the mold unit 800, and thus, the cavity space 801 in the mold unit 800 is filled with the molding material. The injection unit 300 performs a plasticizing process, a filling process, a holding pressure process, or the like under the control of the controller 700. The filling process and holding pressure process are collectively referred to as an injection process. In the plasticizing process, a predetermined amount of liquid molding material is accumulated. In the filling process, the cavity space 801 in the mold unit 800 is filled with the liquid molding material accumulated in the plasticizing process. In the holding pressure process, a holding pressure of the molding material is maintained at a set pressure.

### (Movement Unit)

The movement unit 400 moves the injection unit 300 forward or rearward with respect to the mold unit 800.

### (Controller)

For example, the controller 700 includes a computer, and as shown in Figs. 1 and 2, the controller 700 includes a Central Processing Unit (CPU) 701, a storage medium 702 such as a memory, an input interface 703, and an output interface 704. The controller 700 performs various controls by causing the CPU 701 to execute a program stored in the storage medium 702. In addition, the controller 700 receives a signal from the outside through the input interface 703 and transmits a signal to the outside through the output interface 704.

The controller 700 repeatedly performs the plasticizing process, the mold closing process, the pressure rising process, the mold clamping process, the filling process, the holding pressure process, a cooling process, the decompression process, the mold opening process, the ejection process, or the like to repeatedly manufacture the molding product. A series of operations to obtain the molding product, for example, an operation from the start of the plasticizing process to the start of the next plasticizing process is also referred to as a "shot" or a "molding cycle". In addition, a time required for once shot is also referred to as a "molding cycle time" or a "cycle time".

For example, the once molding cycle includes the plasticizing process, the mold closing process, the pressure rising process, the mold clamping process, the filling process, the hold pressure process, the cooling process, the decompression process, the mold opening process, and the ejection process in this order. Here, this order is an order of the start of each process. The filling process, the holding pressure process, and the cooling process are performed between the mold clamping processes. The start of the mold clamping process may coincide with the start of the filling process. The end of the decompression process coincides with the start of the mold opening process.

In addition, in order to shorten the molding cycle time, the plurality of processes may be simultaneously performed.

In addition, the once molding cycle may include a process other than includes the plasticizing process, the mold closing process, the pressure rising process, the mold clamping process, the filling process, the hold pressure process, the cooling process, the decompression process, the mold opening process, and the ejection process.

The controller 700 is connected to an operation unit 750 or the display unit 760. The operation unit 750 receives an input operation from a user and outputs a signal corresponding to the input operation to the controller 700. The display unit 760 displays a display screen corresponding to the input operation of the operation unit 750 under the control of the controller 700.

The operation screen is used for the setting of the injection molding machine 10 or the like. A plurality of display screens are provided, and thus, are displayed to be switched or to overlap each other. A user operates the operation unit 750 while viewing the display screen displayed by the display unit 760 to perform the setting (including an input of a set value) of the injection molding machine 10 or the like.

For example, the operation unit 750 and the display unit 760 may include a touch panel to be integrated with each other. In addition, in the present embodiment, the operation unit 750 and the display unit 760 are integrated with each other but may be provided independently. In addition, a plurality of the operation units 750 may be provided. The operation unit 750 and the display unit 760 are disposed on the negative side of the mold clamping unit 100 (more specifically, the stationary platen 110) in the Y axis direction. The negative side in the Y axis direction is referred to as the operation side, and the positive side in the Y axis direction is referred to as the counter operation

side.

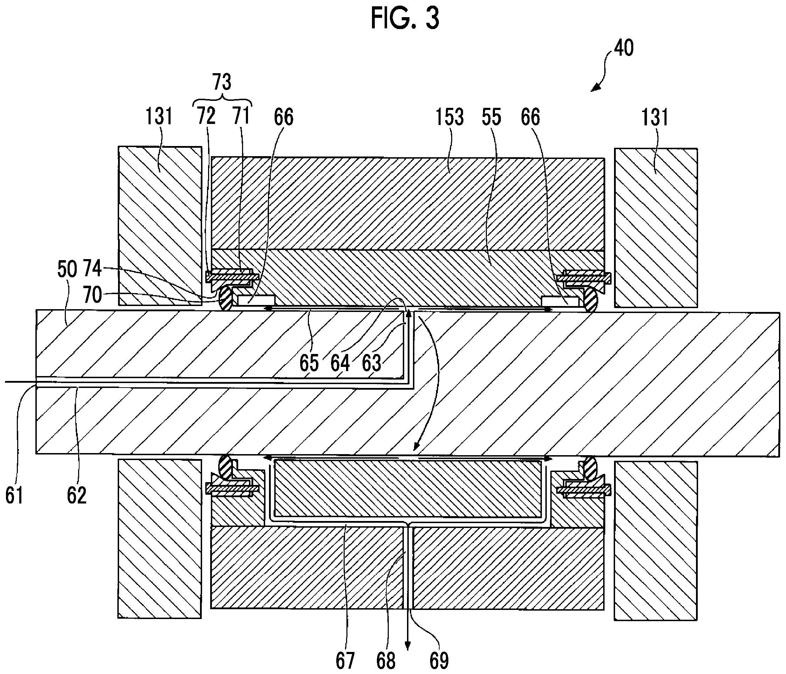

As shown in Figs. 1 and 2, in the toggle mechanisms 150, a connection portion which connects a bearing 121 of the movable platen 120 and the first link 152 by a connection pin is formed. Similarly, in the toggle mechanisms 150, a connection portion which connects the first link 152 and the second link 153 by a connection pin is formed. In the toggle mechanism 150, a connection portion 40 which connects the second link 153 and a bearing portion 131 (refer to Fig. 3 described later) of the toggle support 130 by a connection pin 50 (refer to Fig. 3 described later) is formed. In the toggle mechanism 150, a connection portion which connects the second link 153 and the third link 154 by a connection pin is formed. In the toggle mechanisms 150, a connection portion which connects the third link 154 and the crosshead 151 by a connection pin is formed.

In the connection portion of the connection pin, the connection pin is fixed to be not rotatable to a bearing hole of one connection member (for example, bearing portion 131 of toggle support 130), a bush 55 (refer to Fig. 3) is press-fitted to the other connection member (for example, second link 153), and sliding surfaces of the bush 55 and the connection pin 50 is lubricated.

The mold clamping unit 100 includes a lubricant supply unit which supplies a lubricant to the sliding surface of the connection portion. The lubricant supply unit includes a filter 511, a cooler 512, a tank 513, and a pump 514. Moreover, the lubricant supply unit may be independently provided for each connection portion, and may have a configuration in which a flow channel branches off to be shared. The lubricant is stored in the tank 513. The pump 514 supplies the lubricant to the sliding surface of the connection portion. The lubricant which has lubricated the sliding surface is discharged from a collection connection port 69 (refer to Fig. 3 described later). Foreign substances of the discharged lubricant are removed by the filter 511, and the discharged lubricant is cooled by the cooler 512 and is stored in the tank 513 again.

Next, with respect to a structure of the connection portion, for example, the connection portion 40 in which the second link 153 and the bearing portion 131 of the toggle support 130 are connected by the connection pin 50 will be described with reference to Fig. 3. Fig. 3 is a cross-sectional schematic view explaining a lubrication structure of a connection pin 50 and a bush 55 in the connection portion 40 of the embodiment. In addition, in Fig. 3, an axial direction of the connection pin 50 is a right-left direction on a paper surface. Moreover, the axial direction of the connection pin 50 is the Y direction (refer to Fig. 1).

In the connection pin 50, a supply connection port 61 is provided on an end surface of the connection pin 50, and a supply channel 62 which extends in an axial direction of the connection pin 50 from the supply connection port 61 is provided. That is, one end of the supply channel 62 includes the supply connection port 61. A supply channel 63 extends in a radial direction of the connection pin 50 is provided on the other end side of the supply channel 62, and a supply channel opening portion 64 provided on a circumferential surface of the connection pin 50 is open on the other end side of the supply channel 63. In addition, the supply channel opening portion 64 is provided to be located at an approximately center of the bush 55 in the axial direction of the connection pin 50.

Gathering grooves 66 having a ring shape are formed on an inner peripheral surface of the bush 55 which is press-fitted to the second link 153. The gathering grooves 66 are disposed on both outsides in the axial direction of the connection pin 50 such that the supply channel opening portions 64 is interposed therebetween.

Between the two gathering grooves 66, a bearing gap 65 through which the lubricant is supplied is formed between an inner peripheral surface of the bush 55 and a peripheral surface of the connection pin 50. In addition, seal grooves 56 in which O rings (seal members) 70 are disposed are provided outside the gathering grooves 66 in the axial direction. The seal members 70 seal the bearing gap 65 axially outside the gathering grooves 66.

In addition, a recessed groove which connects two gathering grooves 66 is provided on an outer peripheral surface of the bush 55. The bush 55 is press-fitted to the second link 153, and thus, a collection channel 67 is formed between the recessed groove and an inner peripheral surface of a bearing hole of the second link 153.

In the second link 153 to which the bush 55 is press-fitted, a collection channel 68 which communicates from an inner peripheral surface of the bearing hole to an outer peripheral surface thereof is provided. An inner peripheral surface side of the collection channel 68 communicates with the collection channel 67. An outer peripheral surface side of the collection channel 68 becomes the collection connection port 69. Moreover, when the bush 55 is press-fitted to the second link 153, the bush 55 is press-fitted such that an inner peripheral surface-side opening portion of the collection channel 68 faces the recessed groove of the bush 55, and thus, the collection channel 67 can communicate with the collection channel 68.

Next, a flow of the lubricant will be described. As shown by an arrow, the lubricant supplied from the supply connection port 61 by the pump 514 flows through the supply channel 62 and the supply channel 63 and is supplied to the supply channel opening portion 64 formed on the peripheral surface of the connection pin 50. Moreover, the lubricant supplied from the supply channel opening portion 64 flows from the supply channel opening portion 64 to the gathering grooves 66 through the bearing gap 65 which is a gap between the inner peripheral surface of the bush 55 and the outer peripheral surface of the connection pin 50, and thus, the sliding surfaces of the bush 55 and the connection pin 50 are lubricated. In addition, outsides of the gathering grooves 66 in the axial direction are sealed by the seal members 70, and thus, the lubricant is prevented from leaking from the gap between the connection pin 50 and the bush 55.

Moreover, the lubricant which has flowed to the gathering grooves 66 flows to the collection channel 67 and the collection channel 68, and is discharged from the collection connection port 69. The foreign substances of the discharged lubricant are removed by the filter 511, and the lubricant is cooled by the cooler 512 and is again stored in the tank 513.

Moreover, the connection portion 40 has tightening mechanisms 73 for tightening the seal members 70. For example, each tightening mechanism 73 has a pressing member 71 and bolts 72. The pressing member 71 has a tapered portion 74. Each bolt 72 is inserted into a through-hole provided in the pressing member 71 and is screwed to a screw hole provided in the bush 55. By tightening the bolts 72, the pressing member 71 moves from an axially outside of the bush 55 toward an axially inside thereof. Accordingly, the tapered portion 74 of the pressing member 71 presses the seal member 70 from the axially outside of the bush 55 toward the axially inside thereof. The seal member 70 is interposed between the tapered portion 74 and the bush 55, and thus, is deformed to expand in a radial direction of the connection pin 50. Therefore, the seal member 70 can be formed to a side of the connection pin 50.

In this way, according to the injection molding machine 10 of the embodiment, even in a case where the seal member 70 is worn, it is possible to adjust sealing performance between the seal member 70 and the connection pin 50 by tightening the bolts 72.
Therefore, it is possible to recover sealing performance between the seal member 70 and the connection pin 50. Moreover, even when the seal member 70 is worn, it is possible to use the connection portion 40 in a state where the sealing performance is secured. Therefore, compared to a connection portion which does not have the tightening member 73, in the connection portion 40, it is possible to use a long seal member 70. Therefore, it is possible to lengthen a cycle of maintenance such as replacement of the seal member 70. Accordingly, it is possible to improve maintainability of the injection molding machine 10.

Moreover, a gap may be provided between the bearing portion 131 of the toggle support 130 and the second link 153 in the axial direction of the connection pin 50. The bolts 72 can be tightened by a jig passing through the gap. Therefore, it is possible to adjust the sealing performance between the seal member 70 and the connection pin 50 without disassembling the toggle mechanism 150.

Hereinbefore, the embodiment of the injection molding machine 10 is described. However, the present invention is not limited to the above-described embodiment, and various modifications and improvements are possible within the scope of the present invention described in claims.

The case of the connection portion between the bearing portion 131 of the toggle support 130 and the second link 153 is described as an example. However, another connection portion may have the tightening mechanism 73 (pressing member 71, bolt 72) for tightening the seal member 70.

Moreover, the tightening mechanism 73 is not limited to the tightening by the bolts 72, and may use other methods.

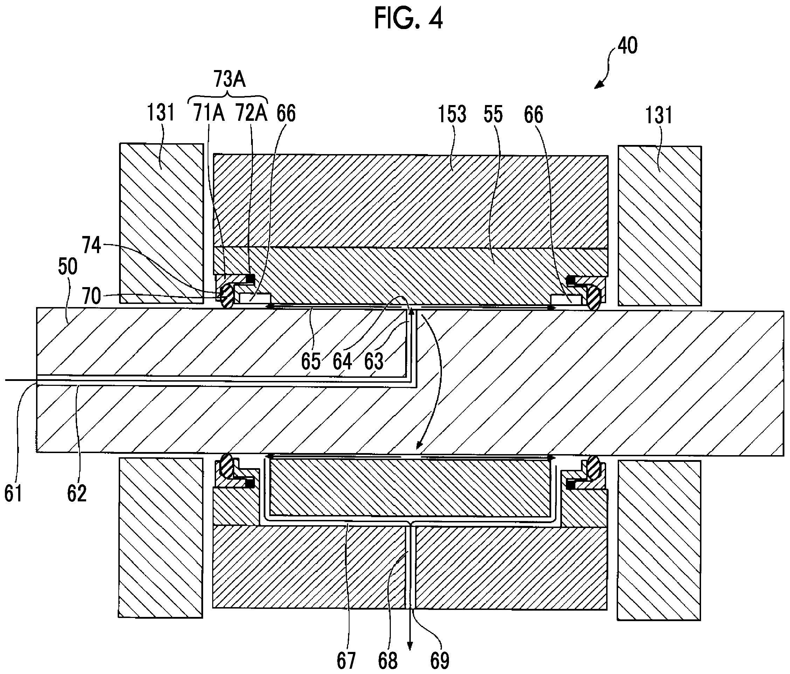

Fig. 4 is a cross-sectional schematic view explaining a lubrication structure of the connection pin 50 and the bush 55 in the connection portion 40 of another embodiment. Compared to the connection portion 40 according to the embodiment, in the connection portion 40 according to another embodiment, a configuration of a tightening mechanism 73A for tightening the seal member 70 is different. Other configurations are similar, and repeated configurations are omitted.

As shown in Fig. 4, each tightening mechanism 73A has a pressing member 71A and a tension spring 72A. The tension spring 72A biases the pressing member 71A toward an inside of the bush 55.

In this way, according to the injection molding machine of another embodiment, even in a case where the seal member 70 is worn, it is possible to adjust sealing performance between the seal member 70 and the connection pin 50 by tightening the seal member 70 using a biasing force of the tension spring 72A.

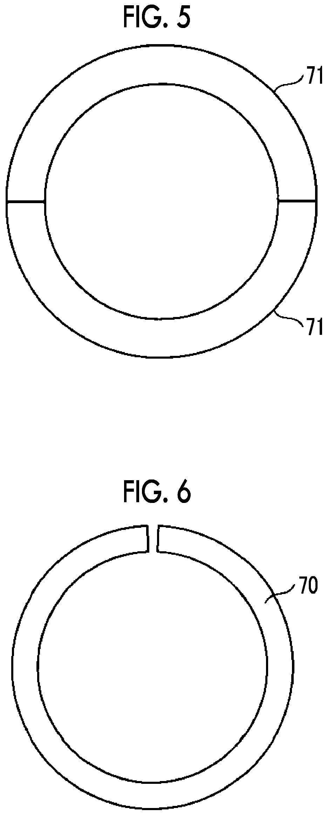

Fig. 5 is a view showing an example of the pressing member 71. Fig. 6 is a view showing an example of the seal member 70.

The pressing member 71 may be formed is a split pattern. Moreover, the seal member 70 may have a notch. According to this configuration, for example, even when the second link 153 is not removed from the bearing portion 131 of the toggle support 130, it is possible to attach or remove the pressing member 71. In addition, even when the second link 153 is not removed from the bearing portion 131 of the toggle support 130, it is possible to replace the seal member 70.

In addition, the case where the supply channel through which the lubricant is supplied to the bearing gap 65 is provided in the connection pin 50 is described. However, the supply channel may be provided in the bush 55 and the second link 153.

### Brief Description of the Reference Symbols

- 40:: connection portion
- 50:: connection pin
- 55:: bush
- 61:: supply connection port
- 62, 63:: supply channel
- 64:: supply channel opening portion
- 65:: bearing gap
- 66:: gathering groove
- 67, 68:: collection channel (discharge channel)
- 69:: collection connection port
- 70:: seal member
- 71, 71A:: pressing member
- 72:: bolt
- 72A:: tension spring
- 73, 73A:: tightening mechanism
- 73:: tapered portion
- 100:: mold clamping unit
- 110:: stationary platen
- 120:: movable platen
- 130:: toggle support (rear platen)
- 131:: bearing portion
- 150:: toggle mechanism (link mechanism)
- 151:: crosshead (link)
- 152:: first link (link)
- 153:: second link (link)
- 154:: third link (link)

## Claims

1. An injection molding machine (10) comprising:
a toggle mechanism (150) which connects a movable platen (120) and a rear platen (130),
the toggle mechanism (150) includes
a plurality of links (151, 152, 153, 154),
a first connection portion (40) which connects the movable platen (120) and the link (152),
a second connection portion (40) which connects the links (152, 153) to each other, and
a third connection portion (40) which connects the rear platen (130) and the link (154),
at least one of the first to third connection portions (40) includes
a bush (55),
a connection pin (50) which is inserted into the bush (55),
a supply channel (62, 63) through which a lubricant is supplied to a bearing gap (65) which is a gap between the bush (55) and the connection pin (50),
a discharge channel (67, 68) through which the lubricant is discharged from the bearing gap (65),
a seal member (70) which seals the bearing gap (65), and
a tightening mechanism (73, 73A) for tightening the seal member (70), **characterized in that**
a sealing performance between the seal member (70) and the connection pin (50) is adjustable by the tightening mechanism (73, 73A).

2. The injection molding machine according to claim 1,
wherein the tightening mechanism (73, 73A) has a pressing member (71, 71A) which presses the seal member (70) from an axially outside of the bush (55) toward an axially inside thereof.

3. The injection molding machine according to claim 2,
wherein the tightening mechanism (73, 73A) has a bolt which fastens the pressing member (71, 71A) to the bush (55).

4. The injection molding machine according to claim 2,
wherein the tightening mechanism (73, 73A) has a spring (72A) which pulls the pressing member (71, 71A) toward the axially inside of the bush (55).

5. The injection molding machine according to any one of claims 2 to 4,
wherein the pressing member (71, 71A) is formed in a split pattern.

6. The injection molding machine according to any one of claims 1 to 5,
wherein the seal member (70) has a notch.

## Patentansprüche

1. Spritzgießmaschine (10), umfassend:
einen Kniehebelmechanismus (150), der eine bewegliche Platte (120) und eine hintere Platte (130) verbindet,
wobei der Kniehebelmechanismus (150) umfasst mehrere Bindeglieder (151, 152, 153, 154),
einen ersten Verbindungsabschnitt (40), der die bewegliche Platte (120) und das Bindeglied (152) verbindet,
einen zweiten Verbindungsabschnitt (40), der die Bindeglieder (152, 153) miteinander verbindet, und
einen dritten Verbindungsabschnitt (40), der die hintere Platte (130) und das Bindeglied (154) verbindet,
zumindest einer der ersten bis dritten Verbindungsabschnitte (40) umfasst
eine Buchse (55),
einen in die Buchse (55) eingeführten Verbindungsstift (50),
einen Zufuhrkanal (62, 63), durch den ein Schmiermittel an einen Lagerspalt (65) zugeführt wird, der ein Spalt zwischen der Buchse (55) und dem Verbindungsstift (50) ist,
einen Ausleitungskanal (67, 68), durch den das Schmiermittel aus dem Lagerspalt (65) ausgeleitet wird,
ein Dichtungselement (70), das den Lagerspalt (65) abdichtet, und
einen Spannmechanismus (73, 73A) zum Spannen des Dichtungselements (70),
**dadurch gekennzeichnet, dass**
ein Dichtungsverhalten zwischen dem Dichtungselement (70) und dem Verbindungsstift (50) durch den Spannmechanismus (73, 73A) einstellbar ist.

2. Spritzgießmaschine nach Anspruch 1,
wobei der Spannmechanismus (73, 73A) ein Presselement (71, 71A) aufweist, welches das Dichtungselement (70) von einer axialen Außenseite der Buchse (55) in Richtung einer axialen Innenseite derselben drückt.

3. Spritzgießmaschine nach Anspruch 2,
wobei der Spannmechanismus (73, 73A) eine Schraube aufweist, die das Presselement (71, 71A) an der Buchse (55) befestigt.

4. Spritzgießmaschine nach Anspruch 2,
wobei der Spannmechanismus (73, 73A) eine Feder (72A) aufweist, die das Presselement (71, 71A) in Richtung der axialen Innenseite der Buchse (55) zieht.

5. Spritzgießmaschine nach einem der Ansprüche 2 bis 4,
wobei das Presselement (71, 71A) als geteilte Struktur ausgebildet ist.

6. Spritzgießmaschine nach einem der Ansprüche 1 bis 5, wobei das Dichtungselement (70) eine Kerbe aufweist.

## Revendications

1. Une machine de moulage à injection (10) comprenant :
un mécanisme de bascule (150) qui relie une platine mobile (120) et une platine arrière (130),
le mécanisme de bascule (150) comprenant
une pluralité de liaisons (151, 152, 153, 154),
une première partie de raccordement (40) qui relie la platine mobile (120) et la liaison (152),
une seconde partie de raccordement (40) qui relie les liaisons (152, 153) les unes aux autres, et
une troisième partie de raccordement (40) qui relie la platine arrière (130) et la liaison (154),
au moins l'une de la première à la troisième parties de raccordement (40) comprend
une chemise (55),
une broche de raccordement (50) qui est insérée dans la chemise (55),
un canal d'alimentation (62, 63) par lequel un lubrifiant est fourni à un jeu de palier (65) qui est un espace situé entre la chemise (55) et la broche de raccordement (50),
un canal d'évacuation (67, 68) par lequel le lubrifiant est évacué du jeu de palier (65),
un élément d'étanchéité (70) qui ferme le jeu de palier (65), et
un mécanisme de serrage (73, 73A) destiné à serrer l'élément d'étanchéité (70), **caractérisée en ce que**
une performance d'étanchéité entre l'élément d'étanchéité (70) et la broche de raccordement (50) est ajustable à l'aide du mécanisme de serrage (73, 73A).

2. La machine de moulage à injection selon la revendication 1,
dans laquelle le mécanisme de serrage (73, 73A) possède un élément de pression (71, 71A) qui appuie sur l'élément d'étanchéité (70) axialement entre l'extérieur de la chemise (55) et l'intérieur de celle-ci.

3. La machine de moulage à injection selon la revendication 2,
dans laquelle le mécanisme de serrage (73, 73A) possède un boulon qui fixe l'élément de pression (71, 71A) sur la chemise (55).

4. La machine de moulage à injection selon la revendication 2,
dans laquelle le mécanisme de serrage (73, 73A) possède un ressort (72A) qui tire l'élément de pression (71, 71A) axialement vers l'intérieur de la chemise (55).

5. La machine de moulage à injection selon l'une quelconque des revendications 2 à 4,
dans laquelle l'élément de pression (71, 71A) est formé en un modèle en deux parties.

6. Machine de moulage à injection selon l'une quelconque des revendications 1 à 5,
dans laquelle l'élément d'étanchéité (70) possède une encoche.
